(19) Europäisches Patentamt / European Patent Office / Office européen des brevets

(11) **EP 3 868 830 A1**

(12) **EUROPEAN PATENT APPLICATION**
published in accordance with Art. 153(4) EPC

(43) Date of publication:
**25.08.2021 Bulletin 2021/34**

(51) Int Cl.:
***C08L 81/02*** *(2006.01)*  ***C08K 7/14*** *(2006.01)*
***C08K 7/04*** *(2006.01)*  ***C08K 7/08*** *(2006.01)*

(21) Application number: **19872546.7**

(22) Date of filing: **15.10.2019**

(86) International application number:
**PCT/KR2019/013518**

(87) International publication number:
**WO 2020/080798 (23.04.2020 Gazette 2020/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.10.2018 KR 20180125483**

(71) Applicant: **SK Chemicals Co., Ltd.
Seongnam-si, Gyeonggi-do 13494 (KR)**

(72) Inventors:
• **CHOI, Se-Ran
  Gyeonggi-do 13494 (KR)**
• **SHIN, Jong-Wook
  Gyeonggi-do 13494 (KR)**
• **JUNG, Myung-Wook
  Gyeonggi-do 13494 (KR)**

(74) Representative: **Berggren Oy
P.O. Box 16
Eteläinen Rautatiekatu 10A
00101 Helsinki (FI)**

(54) **POLYARYLENE SULFIDE RESIN COMPOSITION**

(57)    The present disclosure relates to a polyarylene sulfide resin composition, which is excellent in dimensional stability and creep retention at high temperatures while having high ductility and excellent brittleness at low temperatures, and thus may be suitably used for water-related parts requiring low brittleness at low temperatures and high creep retention at high temperatures.

EP 3 868 830 A1

**Description**

[TECHNICAL FIELD]

The present disclosure relates to a polyarylene sulfide resin composition which is excellent in ductility and dimensional stability, and is suitable for the preparation of water-related parts.

[BACKGROUND OF ART]

Polyarylene sulfide (PAS) is divided into linear and branched PAS, and has different advantages and disadvantages depending on the structure. Linear PAS has high ductility due to flexibility of its main chain, but has lower creep retention at high temperatures as compared with branched PAS. Meanwhile, there are two types of branched PAS. One of them is prepared by forming branches on a main chain during polymerization, and the other is prepared by thermally oxidizing linear PAS. The branched PAS has lower brittleness at low temperatures and lower ductility, but has superior creep retention as compared with linear PAS.

Meanwhile, water-related parts such as heat exchangers, water heaters, water pipes, etc. have recently been made of plastic instead of metal materials. Since the water-related parts should function stably over a wide temperature range, it is preferable to use materials having excellent rigidity and dimensional stability at high temperatures and excellent flexibility and brittleness at low temperatures.

The polyarylene sulfide resin is used as a material of the water-related parts because of excellent heat resistance and mechanical strength, and there is a continuing development of PAS resins with improved performance.

[DETAILED DESCRIPTION OF THE INVENTION]

[Technical Problem]

The present disclosure is to provide a polyarylene sulfide resin composition having excellent creep retention at high temperatures and excellent brittleness at low temperatures, and which is suitable for water-related parts and the like.

[Technical Solution]

In the present disclosure, a resin composition is provided, including

a first polyarylene sulfide having $\alpha$ of 0.4 to 0.7 in the Mark-Houwink equation,
a second polyarylene sulfide having $\alpha$ of more than 0.7 to 1 or less in the Mark-Houwink equation,
a glass fiber, and
an elastomer,
wherein a weight ratio of the first polyarylene sulfide and the second polyarylene sulfide is 10:1 to 1:4.

The resin composition may have $\alpha$ of 0.5 to 0.7 in the Mark-Houwink equation.

The first polyarylene sulfide may have a number average molecular weight of 5000 to 50,000.

The first polyarylene sulfide may have a melt viscosity of 10 to 50,000 poise at 300 °C.

The second polyarylene sulfide may have a number average molecular weight of 10 to 1000.

The second polyarylene sulfide may have a melt viscosity of 10 to 10,000 poise at 300 °C.

A total amount of the first polyarylene sulfide and the second polyarylene sulfide may be 40 wt% or more of a total weight of the resin composition.

The weight ratio of the first polyarylene sulfide and the second polyarylene sulfide may be 9:1 to 1:4.

The glass fiber may have an average diameter of 6 to 15 $\mu$m and an average length of 2 to 5 mm.

The glass fiber may be surface-treated with silane containing an epoxy group, an amino group, or both.

The glass fiber may be included at 20 to 50 wt% of a total weight of the resin composition.

The elastomer may be a thermoplastic elastomer selected from the group consisting of a polyvinyl chloride-based elastomer, a polyolefin-based elastomer, a polyurethane-based elastomer, a polyester-based elastomer, a polyamide-based elastomer, a polybutadiene-based elastomer, and a terpolymer elastomer of glycidyl methacrylate, methyl acryl ester, and ethylene.

The elastomer may be included at 1 to 8 wt% of a total weight of the resin composition.

The resin composition may further include at least one additive selected from the group consisting of a compatibilizer, a mold release agent, an anti-dripping agent, and a heat stabilizer.

[ADVANTAGEOUS EFFECTS]

The polyarylene sulfide resin composition of the present disclosure is excellent in dimensional stability and creep retention at high temperatures while having high ductility and excellent brittleness at low temperatures, and thus may be suitably used for water-related parts requiring low brittleness at low temperatures and high creep retention at high temperatures.

[DETAILED DESCRIPTION OF THE EMBODIMENTS]

According to the present disclosure, a resin composition is provided, including

a first polyarylene sulfide having $\alpha$ of 0.4 to 0.7 in the Mark-Houwink equation,
a second polyarylene sulfide having $\alpha$ of more than 0.7 to 1 or less in the Mark-Houwink equation,
a glass fiber, and
an elastomer,
wherein a weight ratio of the first polyarylene sulfide and the second polyarylene sulfide is 10:1 to 1:4.

The Mark-Houwink equation is a relationship between a molecular weight and an intrinsic viscosity of a polymer, and can be represented by the following Equation 1. The value $\alpha$ in the Mark-Houwink equation is a branch ratio, which is a value indicating a degree of branching of the polymer. If $\alpha$ is close to 1, the polymer is linear, and if $\alpha$ is close to 0, the polymer is branched.

[Equation 1]

$$[\eta] = K \times M^{\alpha}$$

In Equation 1, $\eta$ is an intrinsic viscosity, M is a molecular weight, and K is a constant.

The resin composition of the present disclosure includes two types of polyarylene sulfide (PAS) resins having different $\alpha$ in the Mark-Houwink equation, thereby having advantages of both linear PAS and branched PAS. Accordingly, the resin composition of the present disclosure exhibits excellent ductility, strength, and creep retention over a wide temperature range, and is suitable for use as a material for water-related parts and the like.

Specifically, the resin composition of the present disclosure includes branched PAS having $\alpha$ of 0.4 to 0.7, 0.45 to 0.65, or 0.5 to 0.6 in the Mark-Houwink equation as the first polyarylene sulfide, and linear PAS having $\alpha$ of more than 0.7 to 1 or less, or 0.73 to 0.9, in the Mark-Houwink equation as the second polyarylene sulfide.

The resin composition including the first polyarylene sulfide and the second polyarylene sulfide at the same time has $\alpha$ of 0.5 to 0.7, or 0.6 to 0.7, and is preferred because it can satisfy all the properties required in the water-related parts, such as low brittleness at low temperatures, high creep retention at high temperatures, and rigidity, within the above range.

The first polyarylene sulfide has a high degree of branching, and is included to provide creep retention at high temperatures and rigidity.

The first polyarylene sulfide may have a melting point of 265 to 290 °C, 270 to 285 °C, or 275 to 283 °C.

The first polyarylene sulfide may have a number average molecular weight of 5000 to 50,000, 8000 to 40,000, or 10,000 to 30,000. In addition, the polyarylene sulfide may have polydispersity, which is defined as a ratio of the weight average molecular weight to the number average molecular weight, of 2.0 to 4.5, 2.0 to 4.0, or 2.0 to 3.5. In this case, the number average molecular weight and the weight average molecular weight may be measured using gel permeation chromatography (GPC).

The first polyarylene sulfide may have a melt viscosity of 10 to 50,000 poise, 100 to 20,000 poise, or 300 to 10,000 poise measured at 300 °C using a rotating disk viscometer. When the melt viscosity is less than 10 poise, which corresponds to a polymer having ultra-low viscosity, there may be a limit in securing mechanical properties even if an inorganic material is added. When it exceeds 50,000 poise, which is excessively high viscosity, there may be problems in extrusion processability and injection moldability.

A preparation method of the first polyarylene sulfide is not particularly limited as long as it satisfies the above-mentioned physical properties. For example, the first polyarylene sulfide may be prepared by melt polymerization of a reaction mixture containing a diiodo aromatic compound and a sulfur element.

The diiodo aromatic compound for use in the melt polymerization may be at least one selected from the group consisting of diiodobenzene (DIB), diiodonaphthalene, diiodobiphenyl, diiodobisphenol, and diiodobenzophenone, but is not limited thereto. Also, a diiodo aromatic compound bonded by a substituent such as an alkyl group, a sulfone group, or the like, and a diiodo aromatic compound in which an oxygen or nitrogen atom is contained in the aromatic group, may be used. Further, the diiodo aromatic compound has various isomers of the diiodo compound according to the position to which an iodine atom is attached, and among these isomers, a compound in which an iodine atom is attached to a para position such as para-diiodobenzene (pDIB), 2,6-diiodonaphthalene, or p,p'-diiodobiphenyl is more suitable.

The form of the sulfur element reacting with the diiodo aromatic compound is not particularly limited. Generally, the sulfur element exists in a ring form in which 8 atoms are linked (cyclooctasulfur, $S_8$) at room temperature, and any other commercially available sulfur in a solid or liquid state not having the above structure may also be used without particular limitation.

The reactant may further contain a branch agent. Specifically, the branch agent may be a triiodo aromatic compound, a diiodo aromatic compound in which the position of iodine atom is ortho or meta, or a combination thereof. For example, the triiodo aromatic compound may be at least one selected from the group consisting of triiodobenzene (TIB), triiodonaphthalene, triiodobiphenyl, triiodobisphenol, triiodophenyldisulfide, and triiodobenzophenone, but is not limited thereto. In addition, a triiodo aromatic compound bonded by a substituent such as an alkyl group, a sulfone group, or the like, and a triiodo aromatic compound in which an oxygen or nitrogen atom is contained in the aromatic group, may be used.

The diiodo aromatic compound in which an iodine atom is bonded at the ortho or meta position may be an isomer in which the iodine atom is bonded at the ortho or meta position among the diiodo aromatic compounds selected from the group consisting of diiodobenzene, diiodonaphthalene, diiodobiphenyl, diiodobisphenol, diiodopheyldisulfide, and diiodobenzophenone, but is not limited thereto. In addition, it may be an isomer of a diiodo aromatic compound in which an iodine atom is bonded at the ortho or meta position, wherein a substituent such as an alkyl group or a sulfone group is bonded, or an oxygen or nitrogen atom is contained in the aromatic group. More specifically, the branch agent may be selected from triiodobenzene, triiodobiphenyl, ortho-diiodobenzene (o-DIB), meta-diiodobenzene (m-DIB), and a combination thereof.

The reactant may further contain a polymerization initiator, a stabilizer, or a mixture thereof. Specifically, the polymerization initiator may include at least one selected from the group consisting of 1,3-diiodo-4-nitrobenzene, mercaptobenzothiazole, 2,2'-dithiobenzothiazole, cyclohexyl-benzothiazole sulfenamide, and butyl-benzothiazole sulfenamide, but is not limited thereto.

Also, the stabilizer is not particularly limited as long as it is commonly used in the polymerization reaction of resins. Metal fatty acid salt-based, phosphorus-based, lead-based, and organic tin-based stabilizers may be used without limitation.

Meanwhile, a polymerization terminator may be added during the polymerization reaction as described above. The polymerization terminator is not particularly limited as long as it is a compound capable of stopping the polymerization by removing iodine groups contained in the polymer to be polymerized. Specifically, the polymerization terminator may be at least one selected from the group consisting of diphenyl sulfide, diphenyl ether, diphenyl, benzophenone, dibenzothiazole disulfide, monoiodoaryl compounds, benzothiazoles, benzothiazolesulfenamides, thiurams, dithiocarbamates, and diphenyl disulfide.

More specifically, the polymerization terminator may be at least one selected from the group consisting of iodobiphenyl, iodophenol, iodoaniline, iodobenzophenone, 2-mercaptobenzothiazole, 2,2'-dithiobisbenzothiazole, N-cyclohexylbenzothiazole-2-sulfenamide, 2-morpholinothiobenzothiazole, N,N-dicyclohexylbenzothiazole-2-sulfenamide, tetramethylthiuram monosulfide, tetramethylthiuram disulfide, zinc dimethyldithiocarbamate, zinc diethyldithiocarbamate, and diphenyl disulfide.

Meanwhile, the addition timing of the polymerization terminator may be determined in consideration of the target molecular weight of the polyarylene sulfide to be finally polymerized. For example, the polymerization terminator may be added at a point when about 70 to 100 wt % of the diiodo aromatic compound contained in the initial reactant is reacted and consumed.

The polymerization reaction condition is not particularly limited as long as the polymerization of the reactants containing the diiodo aromatic compound and the sulfur compound can be initiated. For example, the polymerization may be carried out under elevated temperature and reduced pressure conditions. Specifically, the temperature elevation and pressure reduction are performed by changing initial reaction conditions of a temperature of about 180 to 250 °C and a pressure of about 50 to 450 torr to final reaction conditions of about 270 to 350 °C and about 0.001 to 20 torr for about 1 to 30 hours. More specifically, the polymerization may be carried out with final reaction conditions of about 280 to 300 °C and about 0.1 to 0.5 torr.

Meanwhile, the preparation method of the first polyarylene sulfide may further include a step of melt blending reactants containing a diiodo aromatic compound and a sulfur element prior to the polymerization. Such melt blending is not particularly limited as long as all the reactants can be melt-blended. For example, it may be carried out at a temperature of about 130 to 200 °C, specifically about 160 to 190 °C.

When the melt blending step is carried out prior to the polymerization, the subsequent polymerization may be carried out more easily.

In the method for preparing the first polyarylene sulfide according to the embodiment described above, the polymerization may be performed in the presence of a nitrobenzene-based catalyst. Also, in case of further including the melt blending step prior to the polymerization as described above, the catalyst may be added in the melt blending step. Examples of the nitrobenzene-based catalyst may include, but are not limited to, 1,3-diiodo-4-nitrobenzene and 1-iodo-4-nitrobenzene.

The second polyarylene sulfide is linear PAS, and is included for providing flexibility to the resin composition to improve brittleness at low temperatures.

The second polyarylene sulfide may have a melting point of 265 to 290 °C, 270 to 285 °C, or 275 to 283 °C.

The second polyarylene sulfide may have a number average molecular weight of 10 to 1000, 400 to 900, or 600 to 700. In addition, the polyarylene sulfide may have polydispersity, which is defined as a ratio of the weight average molecular weight to the number average molecular weight, of 2.0 to 4.5, 2.0 to 4.0, or 2.0 to 3.5.

The second polyarylene sulfide may have a melt viscosity of 10 to 10,000 poise, 100 to 8000 poise, or 100 to 5000 poise measured at 300 °C using a rotating disk viscometer. When the melt viscosity is less than 10 poise, which is excessively low viscosity, there may be a limit in securing mechanical properties even if an inorganic material is added. When it exceeds 10,000 poise, which is high viscosity, there may be problems in extrusion processability and injection moldability.

A preparation method of the second polyarylene sulfide is not particularly limited. For example, the second polyarylene sulfide may be prepared by solution polymerization of a reaction mixture containing a sulfur compound such as sodium sulfide, a dichloro aromatic compound such as para-dichlorobenzene (pDCB), and a polar organic solvent. A method of the solution polymerization may be found by referring to methods disclosed in US Pat. No. 2,513,188, No. 2,583,941, No. 3,285,882 and the like, but is not limited thereto.

A total amount of the first polyarylene sulfide and the second polyarylene sulfide included in the resin composition of the present disclosure is preferably 40 wt% or more, 50 to 90 wt%, 60 to 80 wt%, or 60 to 70 wt% of a total weight of the resin composition.

In addition, a weight ratio of the first polyarylene sulfide and the second polyarylene sulfide is preferably 10:1 to 1:4 to simultaneously reduce brittleness at low temperatures and achieve creep retention at high temperatures of the resin composition. More preferably, the weight ratio of the first and second polyarylene sulfides may be 9:1 to 1:4, or 9: 1 to 1:1.

The glass fiber of the present disclosure serves to improve heat resistance and mechanical strength of the resin composition. The glass fiber may have an average diameter of 6 to 15 $\mu$m and an average length of 2 to 5 mm. Specifically, the glass fiber may have an average diameter of 8 to 12 $\mu$m and an average length of 3 to 5 mm.

The glass fiber may be surface-treated in order to improve interfacial adhesion with the polyarylene sulfide. That is, the glass fiber may be surface-treated with silane containing an epoxy group, an amino group, or both. For example, the glass fiber may be an alumino-borosilicate glass fiber (E-glass) whose surface is treated with silane containing an epoxy group and an amino group.

The glass fiber may be included at 20 to 50 wt% of a total weight of the resin composition. Specifically, the glass fiber may be included at 35 to 50 wt% of a total weight of the resin composition.

The elastomer serves to improve impact resistance of the resin composition, and a reactive elastomer may be used to improve interfacial adhesion with the polyarylene sulfide. Since the characteristics of the polyarylene sulfide resin composition to be exhibited may be controlled according to a functional group of the elastomer, an elastomer suitable for the desired properties may be appropriately selected and used.

For example, the elastomer may be a thermoplastic elastomer selected from the group consisting of a polyvinyl chloride-based elastomer, a polyolefin-based elastomer, a polyurethane-based elastomer, a polyester-based elastomer, a polyamide-based elastomer, a polybutadiene-based elastomer, and a terpolymer elastomer of glycidyl methacrylate, acryl ester, and ethylene. Specifically, m-EVA (modified-ethylene vinyl acetate) elastomers are more compatible with polyarylene sulfide than m-EB (anhydride modified-ethylene butene) or SEBS (styrene-ethylene/butylene-styrene) elastomers. Also, m-EVA elastomers are preferable because they can secure excellent mechanical properties of the resin composition. In addition, the terpolymer elastomer of glycidyl methacrylate, acryl ester, and ethylene can be preferably used because it can greatly help to increase impact strength by reducing crystallinity of the resin composition.

The elastomer may be included at 1 to 8 wt%, 2 to 6 wt%, or 4 to 7 wt% of a total weight of the resin composition. When the content of the elastomer is less than 1 wt% of a total weight of the resin composition, impact resistance of the composition may be lowered, and when the content exceeds 8 wt%, there may be a problem of deterioration in flame retardancy, so it is preferable to satisfy the above range.

Meanwhile, the resin composition of the present disclosure may further include at least one additive selected from the group consisting of a compatibilizer, a mold release agent, an anti-dripping agent, and a heat stabilizer.

The compatibilizer is a physical property enhancer which improves compatibility between the polyarylene sulfide and the glass fiber to improve interfacial adhesion of the resin composition. Specifically, the compatibilizer may be a silane-based compound. The silane-based compound may be selected from the group consisting of an epoxy silane, a mercaptosilane, an amino silane, and a combination thereof.

Further, the compatibilizer may be a dry silane. The dry silane is prepared by supporting liquid silane on an inorganic material containing micropores. The amount of the silane contained in the dry silane may be 50 to 80 wt %, specifically 60 to 75 wt %, based on a total weight of the dry silane. The liquid silane may be selected from the group consisting of an epoxy silane, a mercaptosilane, an amino silane, and a combination thereof.

The mold release agent (lubricant) is used to prevent friction between the resin and the metal of the mold and to provide detachability (releasing ability) from the mold, and a mold release agent commonly used in the art may be used without limitation. For example, a hydrocarbon-based mold release agent selected from the group consisting of paraffin wax, polyester (PE) wax, polypropylene (PP) wax, oxidized polyester wax, and a combination thereof may be used.

The anti-dripping agent may be a fluorine-based polymer such as polytetrafluoroethylene (PTFE), but is not limited thereto.

The heat stabilizer prevents thermal decomposition of the composition when the resin composition is mixed or molded at a high temperature. For example, magnesium aluminum hydroxide carbonate hydrate may be used, but is not limited thereto.

The resin composition may include 10 to 60 parts by weight of the first polyarylene sulfide, 1 to 60 parts by weight of the second polyarylene sulfide, 20 to 50 parts by weight of the glass fiber, and 1 to 8 parts by weight of the elastomer.

The resin composition of the present disclosure has both advantages of linear PPS and branched PPS, thereby having excellent dimensional stability and creep retention, and exhibiting high impact strength, while having low brittleness at low temperatures and ductility. Therefore, the resin composition can be widely used in various fields such as water-related parts requiring rigidity, excellent ductility, and dimensional stability.

Hereinafter, the present invention will be described in more detail with reference to the following preferred examples. However, these examples are for illustrative purposes only, and the invention is not intended to be limited by these examples.

[Examples]

## Preparation Example 1: Preparation of PPS-1

5130 g of para-diiodobenzene (p-DIB) and 450 g of sulfur were put into a 5 L reactor equipped with a thermocouple capable of measuring an internal temperature of the reactor and a vacuum line capable of nitrogen purging and vacuumizing. The reactor was heated to 180 °C to completely melt and mix the p-DIB and sulfur. Then, a polymerization reaction was carried out under elevated temperature and reduced pressure conditions. Specifically, the temperature elevation and pressure reduction were performed by changing initial reaction conditions, i.e., a temperature of 220 °C and a pressure of 350 torr to final reaction conditions, i.e., 300 °C and 0.6 to 0.9 torr, while feeding 19 g of sulfur over seven times. The degree of the polymerization reaction was calculated as a relative ratio of a current viscosity to a target viscosity by the following equation: "(current viscosity/target viscosity)x100 %". The target viscosity was 2000 poise, and the current viscosity was measured by taking a sample during the polymerization and measuring it with a viscometer. When the polymerization reaction proceeded to 80 %, 35 g of diphenyl disulfide was added as a polymerization terminator and reacted for 1 hour. Thereafter, the reaction was terminated to obtain branched polyphenylene sulfide resin (PPS-1), when the target viscosity was reached by gradually applying vacuum at 0.1 to 0.5 torr. The resulting resin was made into pellets using a small-sized strand cutter.

The melting point (Tm), number average molecular weight (Mn), polydispersity index (PDI), melt viscosity (MV), and branch ratio ($\alpha$) of the resulting PPS-1 were measured in the following manner. As a result, the PPS-1 had the melting point of 280 °C, Mn of 17,500, PDI of 2.5, melt viscosity of 2030 poise, and branch ratio of 0.56.

Melting Point

Using a differential scanning calorimeter (DSC), the melting point was measured while the temperature was raised from 30 to 320 °C at a speed of 10 °C/min, cooled to 30 °C, and then raised again from 30 to 320 °C at a speed of 10 °C/min.

Number Average Molecular Weight (Mn) and Polydispersity Index (PDI)

The PPS resin was added to 1-chloronaphthalene to a concentration of 0.4 wt%, and stirred and dissolved at 250 °C for 25 minutes to prepare a sample. Subsequently, polyphenylene sulfides having different molecular weights were sequentially separated in a column while flowing the sample at a flow rate of 1 mL/min into a high temperature gel permeation chromatography (HT-GPC) system (210 °C). Thereafter, an intensity corresponding to the molecular weight of the separated polyphenylene sulfide was measured by an RI detector. After determining a calibration curve with a standard specimen (polystyrene) whose molecular weight was known, the number average molecular weight (Mn) and polydispersity index (PDI) of the polyphenylene sulfide resin were calculated.

Melt Viscosity (MV)

Melt viscosity was measured at 300 °C using a rotating disk viscometer. In the frequency sweep method, an angular frequency was measured from 0.6 rad/s to 500 rad/s, and the viscosity at 1.84 rad/s was defined as the melt viscosity.

Branch ratio ($\alpha$)

The PPS resin was added to 1-chloronaphthalene to a concentration of 0.4 % (w/v), and stirred and dissolved at 250 °C for 30 minutes, followed by filtration with a 2 $\mu$m porous stainless steel (SUS) filter. An intrinsic viscosity and a molecular weight were measured using a triple system detector (RI, Viscometer, Light Scatter 15° and 90°) of high temp erature gel permeation chromatography (210 °C; Model PL-220 manufactured by Agilent Co.). Then, a Mark-Houwink plot was indicated, and the branch ratio ($\alpha$) was calculated with an average slope. The value $\alpha$ indicates the degree of branching of a polymer. If $\alpha$ is close to 1, the polymer has linear PPS characteristics, and if $\alpha$ is close to 0, the polymer has branched PPS characteristics.

Examples 1 to 6 and Comparative Examples 1 to 4: Preparation of **resin composition**

The resin composition was prepared by the following method using the raw materials of the following Table 1. In Examples 1 to 6, PPS-1 prepared in Preparation Example 1 was used as the first polyarylene sulfide, and Fortron® 0205P4 (PPS-2) manufactured by Celanese was used as the second polyarylene sulfide. In Comparative Examples 1 to 4, PPS-1 was used as the first polyarylene sulfide, and PPS-2 or Ryton® P-6 (PPS-3) manufactured by Solvay was used as the second polyarylene sulfide. The composition (expressed by parts by weight) of the resin composition of each example and comparative example is shown in Tables 2 and 3.

In a twin-screw extruder, a resin composition was prepared by mixing the first and second PPS resins, glass fiber, elastomer, and additive.

The twin-screw extruder was manufactured by SM Platek, and had a diameter of 40 mm and L/D of 44. The process conditions were a screw at 250 rpm, a feed rate of 40 kg/h, a barrel temperature of 280 °C to 300 °C, and a torque of 60 %.

[Table 1 ]

| Item | Property |
|---|---|
| PPS-1 | MV: 2030 poise, Tm: 280 °C, Mn: 17500, $\alpha$: 0.56 |
| PPS-2 | Celanese, Fortron® 0205P4, MV: 700, Tm: 280 °C, $\alpha$: 0.73 |
| PPS-3 | Solvay, Ryton® P-6, MI (380g/10min, @316°C, 5kg), Tm: 281 °C , $\alpha$: 0.28 |
| Glass fiber | Owens Corning, FT-523, diameter: 10 $\mu$m, length: 4mm, surface-treated with an epoxy silane |
| Elastomer | Arkema, Lotader® AX8900 |
| Compatibilizer | Momentive Performance Materials, Silquest® A-187 (an epoxy silane compound) |
| Mold release agent | Mitsui, Hi wax™, 800P, Tm: about 135 °C, Molecular Weight: 8,000 g/mol |
| Anti-dripping agent | Han Nanotech, FS-200 (encapsulation powder) |
| Heat stabilizer | Doobon, CLC-120 (Magnesium Aluminum Hydroxide Carbonate Hydrate) |

[Table 2]

| | Ex. 1 | Ex. 2 | Ex. 3 | Ex. 4 | Ex. 5 | Ex. 6 |
|---|---|---|---|---|---|---|
| PPS-1 | 57.0 | 53.8 | 50.6 | 44.3 | 31.7 | 12.7 |

(continued)

|  |  | Ex. 1 | Ex. 2 | Ex. 3 | Ex. 4 | Ex. 5 | Ex. 6 |
|---|---|---|---|---|---|---|---|
| PPS-2 |  | 6.3 | 9.5 | 12.7 | 19.0 | 31.7 | 50.6 |
| Elastomer |  | 5 | 5 | 5 | 5 | 5 | 5 |
| Glass fiber |  | 30 | 30 | 30 | 30 | 30 | 30 |
| Additive | Compatibilizer | 0.5 | 0.5 | 0.5 | 0.5 | 0.5 |  |
|  | Mold release agent | 0.5 | 0.5 | 0.5 | 0.5 | 0.5 |  |
|  | Anti-dripping agent | 0.5 | 0.5 | 0.5 | 0.5 | 0.5 |  |
|  | Heat stabilizer | 0.2 | 0.2 | 0.2 | 0.2 | 0.2 |  |
| SUM |  | 100 | 100 | 100 | 100 | 100 | 100 |

[Table 3]

|  |  | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|
| PPS-1 |  | 57.0 | 50.6 | 44.3 | 6.3 | 63.3 |  |
| PPS-2 |  |  |  |  | 57.0 |  | 63.3 |
| PPS-3 |  | 6.3 | 12.7 | 19 |  |  |  |
| Elastomer |  | 5 | 5 | 5 | 5 | 5 | 5 |
| Glass fiber |  | 30 | 30 | 30 | 30 | 30 | 30 |
| Additive | Compatibilizer | 0.5 | 0.5 | 0.5 | 0.5 | 0.5 | 0.5 |
|  | Mold release agent | 0.5 | 0.5 | 0.5 | 0.5 | 0.5 | 0.5 |
|  | Anti-dripping agent | 0.5 | 0.5 | 0.5 | 0.5 | 0.5 | 0.5 |
|  | Heat stabilizer | 0.2 | 0.2 | 0.2 | 0.2 | 0.2 | 0.2 |
| SUM |  | 100 | 100 | 100 | 100 | 100 | 100 |

**Experimental Example: Evaluation of physical properties of resin composition**

Injection molded specimens were prepared by injection molding the resin compositions of the examples and comparative examples prepared above at 310 °C. The physical properties of each injection molded specimen were analyzed by the following method, and the results are shown in Tables 4 and 5.

Branch ratio ($\alpha$)

The branch ratio of the injection molded specimen was measured in the same manner as in the measurement of the branch ratio of the PPS resin.

Tensile strength

The tensile strength of the injection molded specimen was measured in accordance with ISO 527.

Tensile elongation

The tensile elongation of the injection molded specimen was measured in accordance with ISO 527-1.

Impact strength (Un-notched)

At room temperature, the impact strength of the injection molded specimen having dimensions of 80 mm (length) * 10 mm (width) * 4 mm (thickness) was measured at room temperature by an un-notched Charpy method in accordance with ISO 179.

At low temperatures, the impact strength of the injection molded specimen having dimensions of 80 mm (length) * 10 mm (width) * 4 mm (thickness) was measured at - 20 °C by a notched Charpy method in accordance with ISO 179.

Creep retention at high temperatures

Flexural creep characteristics which change with time were observed on a 1000 hour basis while maintaining a constant load (20 MPa) at 90 °C .

[Table 4]

| | | Unit | Ex. 1 | Ex. 2 | Ex. 3 | Ex. 4 | Ex. 5 | Ex. 6 |
|---|---|---|---|---|---|---|---|---|
| Branch ratio ($\alpha$) | | - | 0.58 | 0.59 | 0.60 | 0.61 | 0.65 | 0.70 |
| Tensile strength | | MPa | 150 | 148 | 149 | 151 | 151 | 150 |
| Tensile elongation | | % | 2.5 | 2.6 | 2.6 | 2.7 | 2.7 | 2.8 |
| Impact strength (at room temp.) un-notched | | KJ/m$^2$ | 60 | 60 | 61 | 61 | 62 | 61 |
| Flexural creep retention | Initial | % | 100 | 100 | 100 | 100 | 100 | 100 |
| | After 1000hrs | % | 93 | 91 | 91 | 90 | 88 | 85 |
| Impact strength (at low temp.) Notched | | KJ/m$^2$ | 7.3 | 7.4 | 7.8 | 8.0 | 8.2 | 8.5 |

[Table 5]

| | | Unit | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|---|
| Branch ratio ($\alpha$) | | - | 0.53 | 0.51 | 0.48 | 0.72 | 0.56 | 0.73 |
| Tensile strength | | MPa | 145 | 146 | 149 | 150 | 150 | 153 |
| Tensile elongation | | % | 2.2 | 2.3 | 2.1 | 2.6 | 2.2 | 2.8 |
| Impact strength (at room temp.) un-notched | | KJ/m$^2$ | 58 | 60 | 59 | 61 | 52 | 65 |
| Flexural creep retention | Initial | % | 100 | 100 | 100 | 100 | 100 | 100 |
| | After 1000hrs | % | 90 | 92 | 93 | 75 | 93 | 70 |
| Impact strength (at low temp.) Notched | | KJ/m$^2$ | 5.1 | 4.7 | 4.5 | 7.4 | 5.4 | 8.5 |

Referring to Tables 4 and 5, Examples 1 to 6 satisfying the configuration of the present disclosure were confirmed to satisfy excellent tensile strength, tensile elongation, creep retention, and impact strength at the same time. In the case of not using a combination of linear and branched PPS, using branched PPS alone, using linear PPS alone, or using a combination of linear and branched PPS but not within the mixing weight ratio of the present disclosure, all of the tensile strength, tensile elongation, creep retention, and impact strength were not satisfactorily met, and some deterioration of the characteristics was observed.

**Claims**

1.  A resin composition, comprising
    a first polyarylene sulfide having $\alpha$ of 0.4 to 0.7 in the Mark-Houwink equation,

a second polyarylene sulfide having $\alpha$ of more than 0.7 to 1 or less in the Mark-Houwink equation,
a glass fiber, and
an elastomer,
wherein a weight ratio of the first polyarylene sulfide and the second polyarylene sulfide is 10:1 to 1:4.

2. The resin composition of Claim 1,
which has $\alpha$ of 0.5 to 0.7 in the Mark-Houwink equation.

3. The resin composition of Claim 1,
wherein the first polyarylene sulfide has a number average molecular weight of 5000 to 50,000.

4. The resin composition of Claim 1,
wherein the first polyarylene sulfide has a melt viscosity of 10 to 50,000 poise at 300 °C.

5. The resin composition of Claim 1,
wherein the second polyarylene sulfide has a number average molecular weight of 10 to 1000.

6. The resin composition of Claim 1,
wherein the second polyarylene sulfide has a melt viscosity of 10 to 10,000 poise at 300 °C.

7. The resin composition of Claim 1,
wherein a total amount of the first polyarylene sulfide and the second polyarylene sulfide is 40 wt% or more of a total weight of the resin composition.

8. The resin composition of Claim 1,
wherein the weight ratio of the first polyarylene sulfide and the second polyarylene sulfide is 9:1 to 1:4.

9. The resin composition of Claim 1,
wherein the glass fiber has an average diameter of 6 to 15 $\mu$m and an average length of 2 to 5 mm.

10. The resin composition of Claim 1,
wherein the glass fiber is surface-treated with silane containing an epoxy group, an amino group, or both.

11. The resin composition of Claim 1,
wherein the glass fiber is included at 20 to 50 wt% of a total weight of the resin composition.

12. The resin composition of Claim 1,
wherein the elastomer is a thermoplastic elastomer selected from the group consisting of a polyvinyl chloride-based elastomer, a polyolefin-based elastomer, a polyurethane-based elastomer, a polyester-based elastomer, a polyamide-based elastomer, a polybutadiene-based elastomer, and a terpolymer elastomer of glycidyl methacrylate, methyl acryl ester, and ethylene.

13. The resin composition of Claim 1,
wherein the elastomer is included at 1 to 8 wt% of a total weight of the resin composition.

14. The resin composition of Claim 1,
further comprising at least one additive selected from the group consisting of a compatibilizer, a mold release agent, an anti-dripping agent, and a heat stabilizer.

# EP 3 868 830 A1

## INTERNATIONAL SEARCH REPORT

| International application No. |
|---|
| **PCT/KR2019/013518** |

### A. CLASSIFICATION OF SUBJECT MATTER

*C08L 81/02(2006.01)i, C08K 7/14(2006.01)i, C08K 7/04(2006.01)i, C08K 7/08(2006.01)i*

According to International Patent Classification (IPC) or to both national classification and IPC

### B. FIELDS SEARCHED

Minimum documentation searched (classification system followed by classification symbols)
C08L 81/02; C08G 75/02; C08K 3/00; C08L 71/12; C08L 77/00; C08L 81/04; C08K 7/14; C08K 7/04; C08K 7/08

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)
eKOMPASS (KIPO internal) & Keywords: polyarylene sulfide, glass fiber, elastomer

### C. DOCUMENTS CONSIDERED TO BE RELEVANT

| Category* | Citation of document, with indication, where appropriate, of the relevant passages | Relevant to claim No. |
|---|---|---|
| X | JP 2004-002560 A (IDEMITSU PETROCHEM CO., LTD.) 08 January 2004<br>See claims 1, 4; paragraphs [0006], [0008], [0011], [0022]-[0024], [0028]-[0039]. | 1-14 |
| A | JP 6091875 B2 (ASAHI KASEI CHEMICALS CORP.) 08 March 2017<br>See claim 1; paragraphs [0036], [0039], [0050], [0065]-[0068], [0100]. | 1-14 |
| A | KR 10-2006-0065698 A (CHEVRON PHILLIPS CHEMICAL COMPANY LP.)<br>14 June 2006<br>See claim 1; page 6. | 1-14 |
| A | JP 11-158280 A (POLYPLASTICS CO.) 15 June 1999<br>See claims 1-6; paragraphs [0012]-[0017]. | 1-14 |
| A | KR 10-2014-0092454 A (KOLON PLASTICS, INC.) 24 July 2014.<br>See claims 1-9; paragraph [0024]. | 1-14 |

| ☐ | Further documents are listed in the continuation of Box C. | ☒ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 03 FEBRUARY 2020 (03.02.2020) | **04 FEBRUARY 2020 (04.02.2020)** |

| Name and mailing address of the ISA/KR | Authorized officer |
|---|---|
| Korean Intellectual Property Office<br>Government Complex Daejeon Building 4, 189, Cheongsa-ro, Seo-gu,<br>Daejeon, 35208, Republic of Korea<br>Facsimile No. +82-42-481-8578 | Telephone No. |

Form PCT/ISA/210 (second sheet) (January 2015)

11

International application No.

**PCT/KR2019/013518**

| Patent document cited in search report | Publication date | Patent family member | Publication date |
|---|---|---|---|
| JP 2004-002560 A | 08/01/2004 | None | |
| JP 6091875 B2 | 08/03/2017 | JP 2014-114421 A | 26/06/2014 |
| KR 10-2006-0065698 A | 14/06/2006 | BR PI0413751 A | 31/10/2006 |
| | | CA 2536098 A1 | 03/03/2005 |
| | | CN 1856545 A | 01/11/2006 |
| | | EP 1660583 A1 | 31/05/2006 |
| | | JP 2007-502894 A | 15/02/2007 |
| | | MX PA06001901 A | 31/05/2006 |
| | | US 2005-0089688 A1 | 28/04/2005 |
| | | WO 2005-019341 A1 | 03/03/2005 |
| JP 11-158280 A | 15/06/1999 | None | |
| KR 10-2014-0092454 A | 24/07/2014 | None | |

**REFERENCES CITED IN THE DESCRIPTION**

**Patent documents cited in the description**

- US 2513188 A
- US 2583941 A

- US 3285882 A